# DEMANDE DE BREVET EUROPEEN

(11) **EP 0 933 907 A1**
(43) Date de publication de la demande: **04.08.1999**
(21) Numéro de dépôt: 99400135.2
(22) Date de dépôt: 21.01.1999
(51) Int. Cl.: H04M 1/02, H04R 1/28

(54) **Appareil téléphonique mobile à écoute amplifiée**

(30) Priorité: 21.01.1998 FR 9800604
(71) Demandeur: SAGEM SA, 75116 Paris (FR)
(72) Inventeur: Senac, Jean-Christophe, 78000 Versailles (FR)
(74) Mandataire: Bloch, Gérard

(57) **Abrégé**

L' appareil comprend un boîtier (1) avec, à l'intérieur du boîtier, un haut-parleur (2) utilisable en écoute amplifiée et, à côté du haut-parleur (2), un volume acoustique variable et extensible et des moyens (6) pour étendre ledit volume.

## Description

L'invention concerne les appareils téléphoniques mobiles tels que, notamment, les téléphones portables de réseau cellulaire et les combinés de téléphone sans fil.

Plus particulièrement, l'invention concerne les appareils téléphoniques mobiles, comportant un haut-parleur utilisable en écoute amplifiée, pour une utilisation de l'appareil en main libre par exemple.

Pour que l'amplification du son émis par le haut-parleur soit de qualité, il convient de prévoir dans le boîtier de l'appareil téléphonique, à l'arrière du haut-parleur, un volume acoustique, en augmentant par conséquent l'encombrement de l'appareil. La qualité de l'amplification sonore et le faible encombrement de l'appareil semblent donc incompatibles.

La présente invention propose néanmoins de doter un appareil téléphonique mobile d'une écoute amplifiée de qualité, sans augmenter de façon rédhibitoire l'encombrement de l'appareil.

A cet effet, l'invention concerne un appareil téléphonique mobile comprenant un boîtier avec, à l'intérieur du boîtier, un haut-parleur utilisable en écoute amplifiée, caractérisé par le fait qu'il est prévu, à côté du haut-parleur, un volume acoustique variable et extensible et des moyens pour étendre ledit volume.

Grâce à l'invention, l'encombrement de l'appareil téléphonique mobile n'est augmenté qu'en cas d'utilisation du haut-parleur en écoute amplifiée, à volonté.

Dans une forme de réalisation particulière, des moyens d'alimentation électrique et un logement de réception desdits moyens d'alimentation électrique étant prévus, le logement est adjacent au haut-parleur et les moyens d'alimentation électrique sont montés mobiles entre une position escamotée dans laquelle ils occupent le logement et une position déployée dans laquelle ils sont au moins en partie hors du logement dont le volume intérieur fait alors fonction de volume acoustique.

La demanderesse a ainsi su tirer profit du logement des moyens d'alimentation électrique en l'utilisant pour étendre le volume acoustique.

Avantageusement, le boîtier ménage une ouverture de passage des moyens d'alimentation électrique au droit du haut-parleur.

Les moyens d'alimentation électrique peuvent être montés mobiles en translation ou pivotants.

Dans le cas où les moyens d'alimentation électrique sont montés mobiles en translation, l'appareil comprend une collerette entourant le haut-parleur et une cloison déployable reliant la collerette et les moyens d'alimentation électrique.

Avantageusement, dans le cas où les moyens d'alimentation électrique sont pivotants, ils sont solidaires d'une plaque support agencée pour se retourner par pivotement entre une position escamotée et une position déployée.

Une ouverture de passage des moyens d'alimentation électrique étant prévue dans le boîtier, la plaque support peut faire fonction d'obturateur de ladite ouverture.

Avantageusement encore, il est prévu deux ergots, solidaires des moyens d'alimentation électrique et définissant un axe de pivotement des moyens d'alimentation électrique, et deux gorges ménagées dans le boîtier dans lesquelles les deux ergots sont respectivement montés coulissants.

Dans une autre forme de réalisation, l'appareil comprend une enceinte acoustique déployable et le boîtier ménage une ouverture à travers laquelle l'enceinte peut être déployée.

L'invention sera mieux comprise à l'aide de la description suivante de différentes formes de réalisation de l'appareil téléphonique de l'invention, en référence au dessin annexé sur lequel:
- la figure 1 représente une vue en coupe latérale partielle de l'appareil téléphonique selon une première forme de réalisation;
- la figure 2 représente une vue en coupe latérale partielle de l'appareil téléphonique selon une deuxième forme de réalisation;
- la figure 3 représente une vue de face d'une plaque support de l'appareil téléphonique de la figure 2 et
- la figure 4 représente une vue en coupe latérale partielle de l'appareil téléphonique selon une troisième forme de réalisation.

Par souci de clarté, seuls les éléments du téléphone nécessaires à la compréhension de l'invention vont maintenant être décrits.

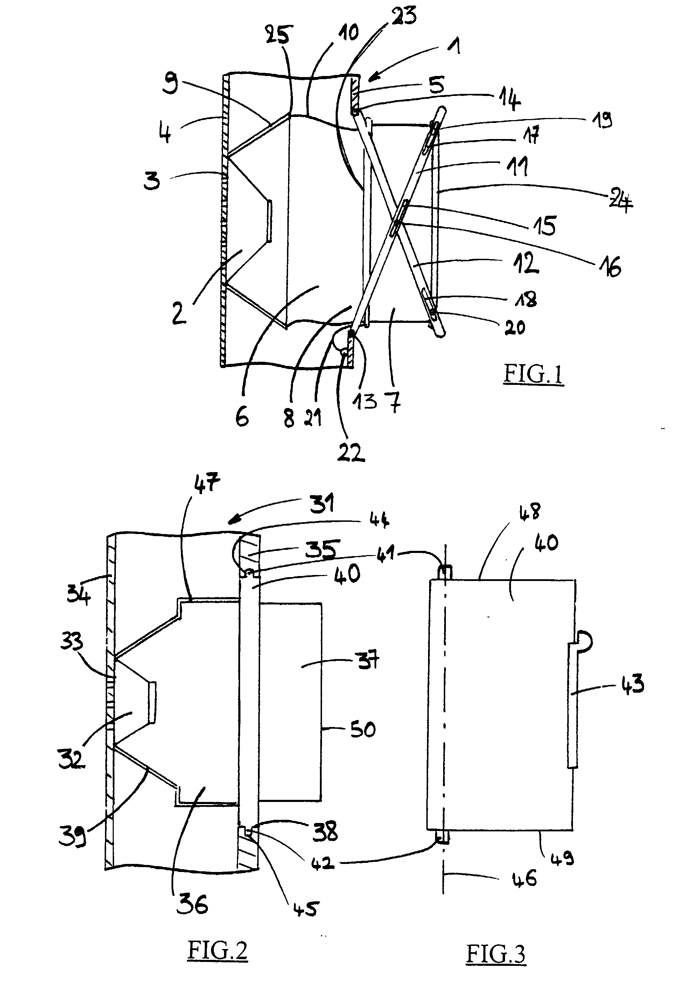

L'appareil téléphonique représenté sur le figure 1 est un téléphone portable de réseau cellulaire et comprend, dans un boîtier 1, un haut-parleur 2, utilisable en écoute amplifiée et relié, de façon classique, à une unité de contrôle du téléphone avec interposition d'un convertisseur numérique-analogique (CNA). L'unité de contrôle et le convertisseur CNA ne sont pas représentés.

Le boîtier 1 comporte une paroi avant 4 et une paroi arrière 5, parallèles entre elles.

Le haut-parleur 2 comporte, à l'avant, une surface d'écoute 3 accolée contre la face arrière d'une zone d'écoute perforée de la paroi avant 4 du boîtier 1 faisant office d'écouteur, contre laquelle un utilisateur du téléphone doit accoler une oreille afin d'écouter le son émis par le haut-parleur 2 en écoute ordinaire, non amplifiée.

Un logement 6 de réception d'une batterie 7, destinée à alimenter électriquement le téléphone, est prévu, dans le boîtier 1, à côté du haut-parleur 2, entre l'arrière du haut-parleur 2 et la paroi arrière 5. On soulignera que le logement 6 est adjacent au haut-parleur 2. La batterie 7 comporte une face avant 23 et une face arrière 24 parallèles entre elles.

Une ouverture 8 de passage de la batterie 7 est ménagée à travers la paroi arrière 5, au droit du haut-parleur 2.

Une collerette 9 fait saillie de la face arrière de la paroi avant 4 et entoure le haut-parleur 2, en s'évasant légèrement de l'avant vers l'arrière. Le bord arrière 25 de la collerette 9 est relié à la face avant 23 de la batterie 7 par une cloison souple déployable 10, présentant, lorsqu'elle est déployée, une forme cylindrique, avec un diamètre égal à celui du bord arrière 25 de la collerette 9.

La batterie 7 est montée mobile en translation sur deux paires de bras latéraux articulés sur le boîtier 1, entre une position escamotée et une position déployée. Une seule 11, 12 des deux paires de bras articulés est représentée sur la figure 1.

Dans la position escamotée, la batterie 7 se trouve à l'intérieur du logement 6, la face avant 23 de la batterie 7 est positionnée à proximité du bord 25 de la collerette 9, la cloison 10 étant pliée, et la face arrière 24 de la batterie 7 obture l'ouverture 8. Il est alors prévu, à côté du haut-parleur 2, un volume acoustique réduit V, délimité sensiblement par l'arrière du haut-parleur 2, la collerette 9, la cloison 10 pliée et la face avant 23 de la batterie 7.

Dans la position déployée, la batterie 7 se trouve ici entièrement hors du logement 6 et du boîtier 1, au droit de l'ouverture 8, et la face avant 23 de la batterie 7 est positionnée à proximité de l'ouverture 8. Le volume acoustique V', situé à côté du haut-parleur 2, à l'arrière de celui-ci, est alors étendu, délimité par l'arrière du haut-parleur 2, la collerette 9, la cloison 10 déployée et la face avant 23 de la batterie 7. Le volume intérieur du logement 6, dégagé, fait ainsi fonction de volume acoustique et s'ajoute au volume acoustique réduit V afin de former le volume acoustique étendu V'.

L'une seule des deux paires de bras articulés 11, 12 va maintenant être décrite, l'autre paire étant similaire. Les bras articulés 11, 12 sont respectivement reliés, à l'une de leurs extrémités, à deux articulations 13, 14, disposées sur la paroi arrière 5 du boîtier 1, à proximité du bord de l'ouverture 8 et en regard l'une de l'autre de part et d'autre de celle-ci. Les bras 11, 12 sont entrecroisés sensiblement en leur milieu et l'un 11 des bras ménage, dans sa partie médiane, une lumière 15 de réception d'un ergot 16 solidaire de l'autre bras 12. Dans leur partie d'extrémité opposée aux articulations 13, 14, les bras 11, 12 ménagent chacun une lumière 17, 18 de réception d'un ergot 19, 20 solidaire de la face arrière de la batterie 7. Les ergots 16, 19, 20 sont respectivement destinés à coulisser dans les lumières 15, 17, 18.

Pour l'alimentation électrique des différents éléments du téléphone, un fil de connexion flexible 21 relie la batterie 7 à un connecteur 22 disposé ici sur la face avant de la paroi arrière 5, au voisinage de l'ouverture 8.

Afin d'utiliser le haut-parleur 2 en écoute amplifiée, pour une utilisation du téléphone en main libre par exemple, on déploie vers l'arrière les deux paires de bras articulés 11, 12 tout en entraînant en translation vers l'arrière la batterie 7 de sa position escamotée à sa position déployée, par passage à travers l'ouverture 8. On fait ainsi varier le volume acoustique à l'arrière du haut-parleur 2, en l'augmentant, en l'étendant, de façon à améliorer la qualité sonore de l'amplification. Le volume acoustique situé à l'arrière du haut-parleur 2 est donc variable et extensible.

On soulignera que le volume acoustique est toujours fermé afin d'assurer l'étanchéité sonore entre l'avant et l'arrière du haut-parleur 2.

La deuxième forme de réalisation du téléphone, représentée sur la figure 2, ne diffère de la première forme de réalisation que par les seuls éléments qui vont maintenant être décrits.

Le téléphone comprend, dans un boîtier 31, un haut-parleur 32 avec une surface d'écoute 33 accolée, à l'avant, contre une zone d'écoute de la paroi avant 34 du boîtier 31 et un logement 36 de réception d'une batterie 37, adjacent au haut-parleur 32, à l'arrière de celui-ci. Une ouverture 38 de passage de la batterie 37, sensiblement rectangulaire, est ménagée au droit du haut-parleur 32, à travers la paroi arrière 35 du boîtier 31.

Le haut-parleur 32 est entouré par une collerette 39 saillant de la paroi avant 34, à l'arrière, et s'évasant légèrement de l'avant vers l'arrière. Une cloison rigide 47, de forme cylindrique, séparant l'intérieur du logement 36 et le reste de l'intérieur du boîtier 31, prolonge vers l'arrière le bord arrière de la collerette 39 sensiblement jusqu'à l'ouverture 38.

La batterie 37 est montée sur une plaque support 40, de forme complémentaire à celle de l'ouverture 38 et faisant fonction d'obturateur de l'ouverture 38. Deux ergots de fixation 41, 42 (figure 3) font respectivement saillie de deux bords opposés 48, 49 de la plaque support 40, chacun à proximité d'un coin de la plaque 40. Les deux ergots 41, 42 définissent un axe de pivotement 46, perpendiculaire aux bords 48, 49.

Un bras de levier 43, destiné à faire pivoter la batterie 37, est articulé sur la plaque support 40, le long du bord perpendiculaire aux bords 48, 49 et reliant les deux coins opposés à ceux proches des ergots 41,42. Deux gorges 44, 45 de réception respectivement des deux ergots de fixation 41, 42 sont ménagées dans le boîtier 41, dans l'épaisseur du bord de l'ouverture 38.

L'ensemble batterie-plaque support 37, 40, est monté mobile entre une position escamotée et une position déployée, par pivotement de 180 degrés autour de l'axe 46, autrement dit par retournement, et coulissement simultané des ergots 41, 42 dans les gorges 44, 45.

Dans la position escamotée, la batterie 37 se trouve dans le logement 36 et il est prévu, à côté du haut-parleur 32, un volume acoustique réduit V, délimité par l'arrière du haut-parleur 32, la collerette 39 et la face 50 de la batterie opposée à la plaque support 40 et orientée vers l'avant.

Dans la position déployée, la batterie 37 est retournée et hors du logement 36 et la face 50 est orientée vers l'arrière. Le volume acoustique, étendu, V' est délimité par l'arrière du haut-parleur 32, la collerette 39, la cloison 47 et la plaque support 40. Le volume intérieur du logement 36 fait ainsi fonction de volume acoustique et s'ajoute au volume acoustique réduit V afin former le volume acoustique étendu V'. Le volume acoustique est donc variable et extensible.

Dans les deux positions, escamotée et déployée, de l'ensemble batterie-plaque support 37, 40, la plaque support 40 obture l'ouverture 38.

Deux jeux de contact électrique, non représentés, sont prévus dans les gorges 44, 45, respectivement à leurs deux extrémités opposées. Les deux jeux de contact sont destinés à coopérer avec les ergots 41, 42 afin d'assurer la connexion électrique de la batterie 37 avec les différents éléments du téléphone, respectivement dans la position déployée de la batterie 37 et dans sa position escamotée.

Afin d'utiliser le haut-parleur 32 en écoute amplifiée, la batterie 37 se trouvant initialement en position escamotée, on fait pivoter la plaque support 40, avec la batterie 37, autour de l'axe de pivotement 46, à l'aide du bras de levier 43, tout en faisant coulisser les ergots 41, 42 dans les gorges 44, 45, de façon à retourner la batterie 37 vers l'extérieur jusque dans sa position déployée.

En position escamotée de la batterie 37, les ergots 41, 42 sont en contact électrique avec l'un des deux jeux de contact électrique et se mettent en contact électrique avec l'autre jeu de contact électrique, après retournement de la batterie 37 en position déployée.

A la place des jeux de contact électrique, on pourrait envisager une connexion électrique analogue à celle de la première forme de réalisation, par un fil de connexion flexible.

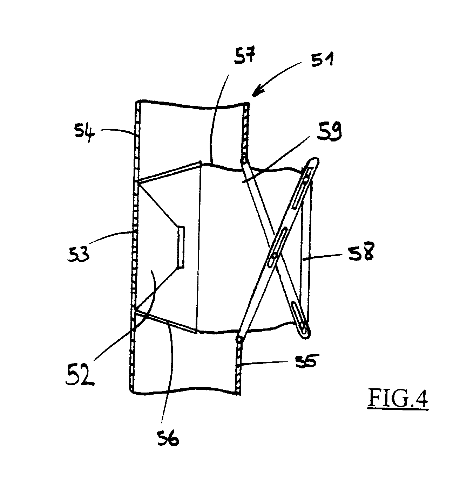

Une troisième forme de réalisation, représentée sur la figure 4 ne diffère de la description ci-dessus que par ce qui va maintenant être décrit.

Le téléphone comprend, dans un boîtier 51, un haut-parleur 52, avec une surface d'écoute 53 en appui contre une zone d'écoute de la paroi avant 54, et une collerette 56 faisant saillie de la paroi 54 à l'arrière et entourant le haut-parleur 52.

Une ouverture 59 de passage d'une enceinte acoustique déployable, explicitée plus loin, est ménagée au droit du haut-parleur 52, à travers la paroi arrière 55 du boîtier 51.

Une cloison souple déployable 57 relie le bord arrière de la collerette 56 et un flasque support 58 de forme complémentaire à celle de l'ouverture 59. Le flasque 58 est monté mobile en translation entre une position escamotée et une position déployée, au moyen d'un système de bras articulés analogue à celui décrit dans la première forme de réalisation.

Dans la position escamotée, le flasque 58 s'étend sensiblement dans le plan de l'ouverture 59 et obture donc celle-ci. Il est alors prévu un volume acoustique réduit V, à côté du haut-parleur 52, délimité par l'arrière du haut-parleur 52, la collerette 56, la cloison 57 légèrement pliée et le flasque 58.

Dans la position déployée, le flasque 58 se trouve au droit de l'ouverture 59, écarté du plan dans lequel s'étend la paroi arrière 55 du boîtier 51, vers l'arrière, et la cloison 57 est déployée. Le volume acoustique V',délimité par l'arrière du haut-parleur 52, la collerette 56, la cloison déployée 57 et le flasque 58, est alors augmenté, étendu par rapport au volume V.

L'ensemble comprenant la collerette 56, la cloison déployable 57 et le flasque 58 constitue ainsi l'enceinte acoustique déployable conformée en soufflet.

Afin d'utiliser le haut-parleur 52 en écoute amplifiée, le flasque 58 obturant initialement l'ouverture 59, on déplace vers l'arrière le flasque 58 jusque dans sa position déployée, tout en déployant la cloison 57, et donc l'enceinte acoustique, à travers l'ouverture 59. On augmente ainsi le volume acoustique à l'arrière du haut-parleur 52.

On vient de décrire un téléphone de réseau cellulaire, l'invention s'applique bien sûr à tout autre appareil de téléphonie portable tel notamment qu'un combiné de téléphone sans fil.

## Revendications

1. Appareil téléphonique mobile comprenant un boîtier (1; 31; 51) avec, à l'intérieur du boîtier, un haut-parleur (2; 32; 52) utilisable en écoute amplifiée, caractérisé par le fait qu'il est prévu, à côté du haut-parleur (2; 32; 52), un volume acoustique variable et extensible et des moyens (6; 36; 57) pour étendre ledit volume.

2. Appareil selon la revendication 1, dans lequel, des moyens d'alimentation électrique (7; 37) et un logement (6; 36) de réception desdits moyens d'alimentation électrique étant prévus, le logement est adjacent au haut-parleur (2; 32) et les moyens d'alimentation électrique (7; 37) sont montés mobiles entre une position escamotée dans laquelle ils occupent le logement (6; 36) et une position déployée dans laquelle ils sont au moins en partie hors du logement (6; 36) dont le volume intérieur fait alors fonction de volume acoustique.

3. Appareil selon la revendication 2, dans lequel le boîtier (1; 31) ménage une ouverture (8; 38) de passage des moyens d'alimentation électrique (7; 37) au droit du haut-parleur (2; 32).

4. Appareil selon l'une des revendications 2 et 3, dans lequel les moyens d'alimentation électrique (7) sont montés mobiles en translation.

5. Appareil selon la revendication 4, comprenant une collerette (9) entourant le haut-parleur (2) et une cloison déployable (10) reliant la collerette (9) et les moyens d'alimentation électrique (7).

6. Appareil selon l'une des revendications 2 et 3, dans lequel les moyens d'alimentation électrique (37) sont montés pivotants.

7. Appareil selon la revendication 6, dans lequel les moyens d'alimentation électrique (37) sont solidaires d'une plaque support (40) agencée pour se retourner par pivotement entre une position escamotée et une position déployée.

8. Appareil selon la revendication 7, dans lequel une ouverture (38) de passage des moyens d'alimentation électrique étant prévu dans le boîtier (31), la plaque support (40) fait fonction d'obturateur de ladite ouverture (38).

9. Appareil selon l'une des revendications 6 à 8, comprenant deux ergots (41, 42), solidaires des moyens d'alimentation électrique (37) et définissant un axe (46) de pivotement des moyens d'alimentation électrique (37), et deux gorges (44, 45) ménagées dans le boîtier (31) dans lesquelles les deux ergots (41, 42) sont respectivement montés coulissants.

10. Appareil selon la revendication 1, comprenant une enceinte acoustique déployable (56, 57, 58) et le boîtier (51) ménage une ouverture (59) à travers laquelle l'enceinte peut être déployée.

11. Appareil selon la revendication 9, dans lequel l'enceinte acoustique (56, 57, 58) est conformée en soufflet.
